# EUROPEAN PATENT APPLICATION

(11) **EP 2 442 428 A1**
(43) Date of publication of application: **18.04.2012**
(21) Application number: 10786013.2
(22) Date of filing: 30.04.2010
(51) Int. Cl.: H02J 7/04, B60L 11/18, H01M 10/44, H02J 7/00, H02J 7/10

(54) **ELECTRIC VEHICLE**

(30) Priority: 09.06.2009 JP 2009137824
(71) Applicant: Kabushiki Kaisha Toyota Jidoshokki, Kariya-shi, Aichi 448-8671 (JP)
(72) Inventor: NAKASHIMA, Yutaka, Kariya-shi Aichi 448-8671 (JP)
(74) Representative: TBK
(86) International application number: PCT/JP2010/057652
(87) International publication number: WO 2010/143482

(57) **Abstract**

An electric vehicle suppresses the discharge of an auxiliary battery for supplying electric power to a control circuit for controlling a charging process while performing timer-charging. When the charging start timing set by a user comes after specified elapsed time, the power supply from an internal power supply circuit 35 to a CPU 36 etc. is stopped until the power supply is started from a charging station 12 to an electric vehicle 13. When the stopped power supply is started, the power supply from the internal power supply circuit 35 to the CPU 36 etc. is resumed.

## Description

### Technical Field

The present invention relates to an electric vehicle for charging a battery for drive of a vehicle driving motor by electric power supplied from a charging station.

### Background Art

In view of environment problems, an electric vehicle loaded with a vehicle driving motor such as an electric car, a plug-in hybrid car, etc. has received widespread attention (refer to, for example, the patent document 1 or 2).

The electric vehicle has, for example, the following charging start sequence for a battery to drive a motor.
1) A user inserts a charging plug provided for the end portion of an AC cable extending from a charging station into an inlet connected to the charger of the electric vehicle.
2) A start-up signal is transmitted to an ECU (hereafter referred to as a control circuit) for control of the charging process of the electric vehicle from the charging station through a communication line associated with the AC cable.
3) The start-up signal activates the control circuit of the electric vehicle.
4) The charging station supplies power to the charger of the electric vehicle.
5) The charger starts charging the battery.

When the charging station is personally owned as, for example, home, the charging plug is inserted into an inlet, and a charging start switch is simply turned on to start charging before the charging operation. However, when a charging station provided for a public facility etc., an unspecific electric vehicle may be charged. Therefore, it is necessary to establish a communication between the charging station and the control circuit of the electric vehicle to perform an authenticating process for determining whether or not the electric vehicle has obtained a permit to be charged. Only if it is determined that the electric vehicle has obtained a permit to be charged, the charging station supplies electric power to the charger of the electric vehicle.

There is no problem when the charging process is immediately started after inserting the charging plug into the inlet. However, when the charging is started in the time period, for example, at midnight in which a power rate is low, the charging is started at specified elapsed time after the charging plug is inserted into the inlet, that is, so-called timer-charging is performed. In this case, the control circuit of the electric vehicle is to continue the operation to wait for the charging start. Since power continues to be supplied from the auxiliary battery to the control circuit, the auxiliary battery is wastefully discharged.

### Documents of Prior Art

### Patent Document

Patent Document 1: Japanese Laid-open Patent Publication No. 7-298502
Patent Document 2: Japanese Laid-open Patent Publication No. 10-80071

### Summary of the Invention

The present invention aims at providing an electric vehicle capable of suppressing the discharge of an auxiliary battery which supplies power to a control circuit for controlling a charging process while timer-charging is performed.

The electric vehicle according to the present invention charges a battery for driving a vehicle driving motor by electric power supplied from a charging station with the charging start timing set by a user, and includes: a control circuit for controlling a charging process when the battery is charged; an internal power supply circuit for supplying electric power obtained from an auxiliary battery to the control circuit; and a detection circuit for detecting the power supplied from the charging station. The control circuit stops the power supply from the internal power supply circuit to the control circuit when the charging start timing comes after a specified lapse of time. The internal power supply circuit resumes the power supply to the control circuit when the detection circuit detects the power.

Thus, when the power is supplied from the charging station after the specified lapse of time, the discharge of the auxiliary battery can be suppressed.

The electric vehicle further includes a conversion circuit for converting the power supplied from the charging station into a direct current, and the internal power supply circuit can be configured to supply to the control circuit the power converted into the direct current by the conversion circuit while the charging station is supplying power.

Thus, the discharge of the auxiliary battery can be suppressed.

According to the present invention, when a battery for driving a vehicle driving motor is charged by the timer-charging, the discharge of the auxiliary battery for supplying power to a control circuit for controlling the charging process can be suppressed.

### Brief Description of Drawings

FIG. 1 illustrates a vehicle charging system;
FIG. 2 is a configuration of a charging station;
FIG. 3 is a configuration of an ECU in the electric vehicle according to an embodiment of the present invention;
FIG. 4 is an example of a voltage detection circuit and a start-up signal generation circuit;
FIG. 5 is a flowchart for explanation of the operation of each circuit in the ECU; and
FIG. 6 is a configuration of the ECU in the electric vehicle according to another embodiment of the present invention.

### Best Mode for Carrying Out the Invention

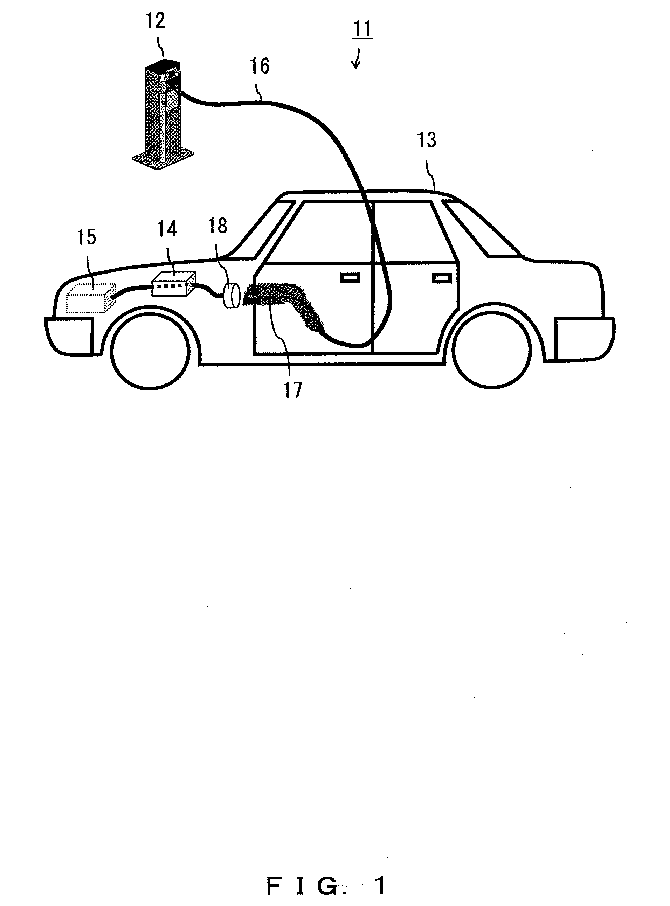

FIG. 1 illustrates a vehicle charging system.

In a vehicle charging system 11 illustrated in Fig. 1, a charging station 12 supplies power to an electric vehicle 13 such as a hybrid car, an electric car, etc.

The electric vehicle 13 according to the present embodiment includes an ECU 14 for controlling a charging process performed when a battery for driving a vehicle driving motor is charged by electric power supplied from the charging station 12, and a charger 15 for charging the battery by the electric power supplied from the charging station 12.

When a user inserts a charging plug 17 provided at the end portion of an AC cable 16 extending from the charging station 12 into an inlet 18 electrically connected to the charger 15, and sets the charging start timing in the charging station 12, electric power is supplied from the charging station 12 to the electric vehicle 13 with the charging start timing.

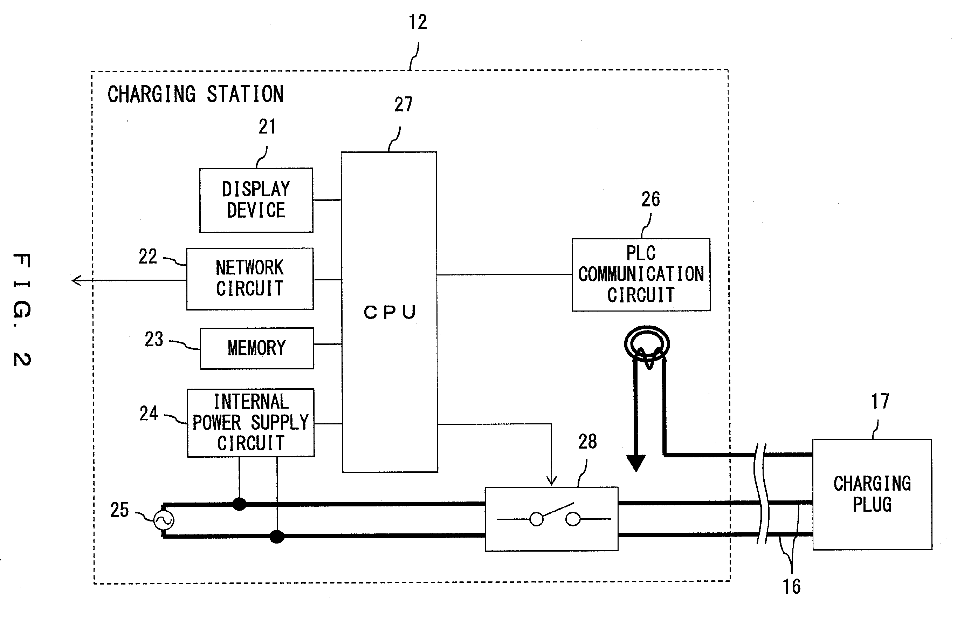

FIG. 2 is a configuration of the charging station 12. The same configuration as FIG. 1 is assigned the same reference numeral.

The charging station 12 illustrated in FIG. 2 is configured by the AC cable 16, the charging plug 17, a display device 21, a network circuit 22, memory 23, an internal power supply circuit 24, a commercial power supply 25, a PLC communication circuit 26, a CPU 27, and a switch 28.

The display device 21 displays the state (stopped, charging, etc.) of the charging station 12, the elapsed charging timing, etc.

The network circuit 22 communicates with a central management unit for managing the charging station 12 and another charging station.

The memory 23 stores an ID code of an authenticated electric vehicle (identification information of an electric vehicle) etc. The ID code can be transmitted from the network circuit 22 to the central management unit, and managed by the central management unit.

The internal power supply circuit 24 supplies the power (AC 100/200 V) obtained from the commercial power supply 25 to the display device 21, the network circuit 22, the PLC communication circuit 26, the CPU 27, etc.

The PLC communication circuit 26 superposes a signal on the AC cable 16, and communicates with the electric vehicle 13. That is, a power line communication is performed between the charging station 12 and the ECU 14 of the electric vehicle 13. For example, the PLC communication circuit 26 receives the ID code transmitted from the electric vehicle 13. The CPU 27 performs an authenticating process about whether or not the electric vehicle 13 has obtained a permit to be charged according to the ID code received in the PLC communication circuit 26 and the ID code stored in the memory 23 in advance. If the authentication is successful, the PLC communication circuit 26 is allowed to transmit the authentication result indicating a "successful authentication" to the electric vehicle 13. In addition, the PLC communication circuit 26 transmits the charging start timing signal indicating the charging start timing set by a user to the successfully authenticated electric vehicle 13. It is assumed that the charging start timing signal indicates "timer-charging" or "immediate charging". When the user sets the charging start timing so that the charging is to start in the time period, for example, at midnight in which a power rate of the commercial power supply 25 is low, the charging start timing signal indicating the "timer-charging" is transmitted to the electric vehicle 13. On the other hand, when the user sets the charging start timing so that the charging is to immediately start, the charging start timing signal indicating the "immediate charging" is transmitted to the electric vehicle 13.

The CPU 27 controls the charging process by controlling the operation of each circuit in the charging station 12. For example, the CPU 27 controls turning on and off the switch 28 based on the charging start timing signal and the authentication result. If the charging start timing signal indicates the "timer-charging", and the authentication result indicates the "successful authentication", and the CPU 27 determines using a timer etc. that the specified time has passed, then it turns on the switch 28, electrically connects the commercial power supply 25 to the AC cable 16, and supplies the power obtained from the commercial power supply 25 to the electric vehicle 13. On the other hand, when the charging start timing signal indicates the "immediate charging" and the authentication result indicates the "successful authentication", the CPU 27 immediately turns on the switch 28, electrically connects the commercial power supply 25 to the AC cable 16, and supplies the power obtained from the commercial power supply 25 to the electric vehicle 13.

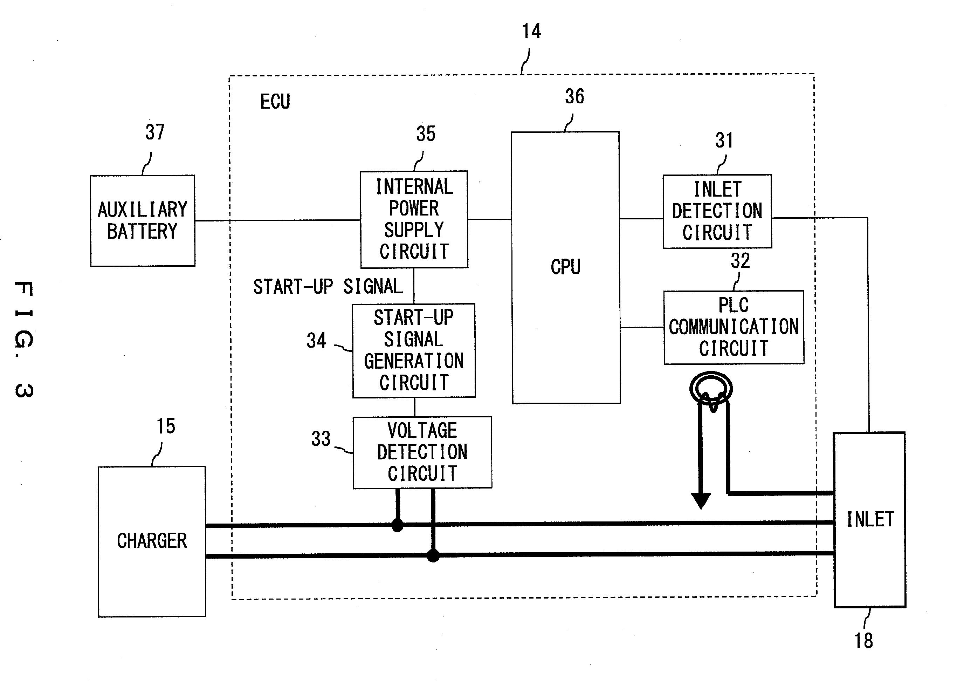

FIG. 3 is a configuration of the ECU 14 in the electric vehicle 13. The same configuration as FIG. 1 is assigned the same reference numeral.

The ECU 14 illustrated in FIG. 3 is configured by an inlet detection circuit 31 (control circuit), a PLC communication circuit 32 (control circuit), a voltage detection circuit 33, a start-up signal generation circuit 34, an internal power supply circuit 35, and a CPU 36 (control circuit). The voltage detection circuit 33, the start-up signal generation circuit 34, or the internal power supply circuit 35 can be provided external to the ECU 14. In addition, it is assumed that the detection circuit within the scope of the claims for the patent is configured by the voltage detection circuit 33 and the start-up signal generation circuit 34.

The inlet detection circuit 31 detects that the charging plug 17 has been inserted into the inlet 18.

The PLC communication circuit 32 communicates with the PLC communication circuit 26 of the charging station 12 by superposing a signal on the AC cable 16. For example, the PLC communication circuit 32 transmits an ID code and a charging start timing request signal to the charging station 12, and receives the authentication result and the charging start timing signal transmitted from the charging station 12.

The voltage detection circuit 33 detects the AC voltage relating to the charger 15 (or the inlet 18).

The start-up signal generation circuit 34 outputs a start-up signal to the internal power supply circuit 35 when the voltage detection circuit 33 detects the AC voltage.

The internal power supply circuit 35 supplies the power obtained from an auxiliary battery 37 (+ 12V) to the inlet detection circuit 31, the PLC communication circuit 32, the start-up signal generation circuit 34, the CPU 36, etc.

The CPU 36 controls the charging process by controlling the operation of each circuit in the ECU 14.

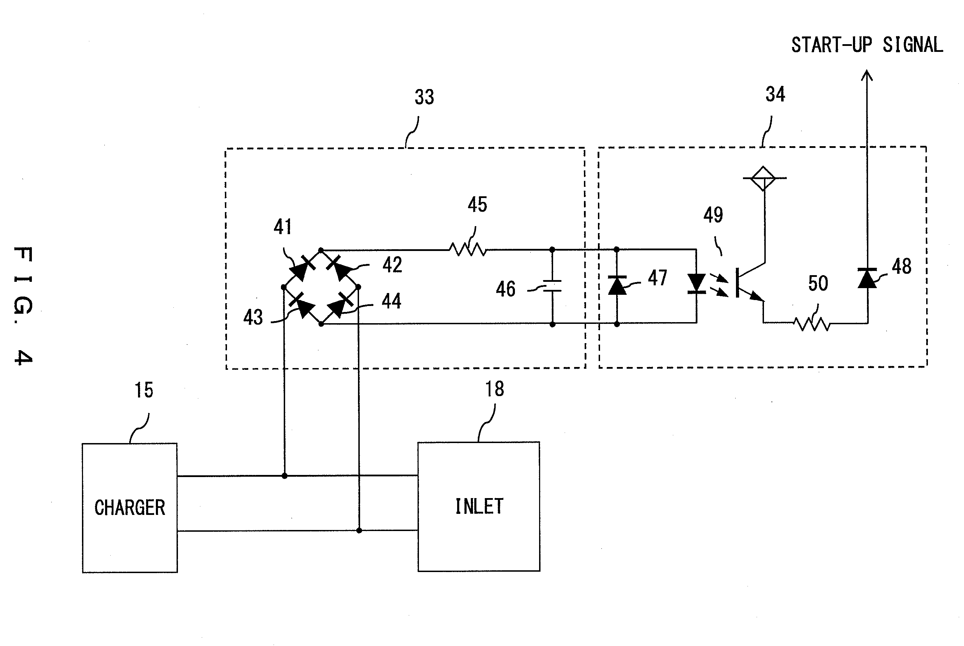

FIG. 4 is an example of the voltage detection circuit 33 and the start-up signal generation circuit 34. The same configuration as FIG. 1 is associated the same reference numeral.

The voltage detection circuit 33 illustrated in FIG. 4 is configured by four diodes 41 through 44, and is configured by a rectifier circuit for rectifying the AC voltage relating to the charger 15 (or the inlet 18), and a smoothing circuit configured by a resistor 45 and a capacitor 46 for smoothing the output of the rectifier circuit.

The start-up signal generation circuit 34 illustrated in FIG. 4 is configured by diodes 47 and 48, a photo-coupler 49, and a resistor 50.

When power is supplied from the charging station 12 to the electric vehicle 13, the voltage relating to the capacitor 46 rises, a current passes through the diode 47, and the photo-coupler 49 is turned on. Then, a current passes through the internal power supply circuit 35 through the resistor 50 and the diode 48. That is, when power is supplied from the charging station 12 to the electric vehicle 13, the current as a start-up signal passes from the start-up signal generation circuit 34 to the internal power supply circuit 35.

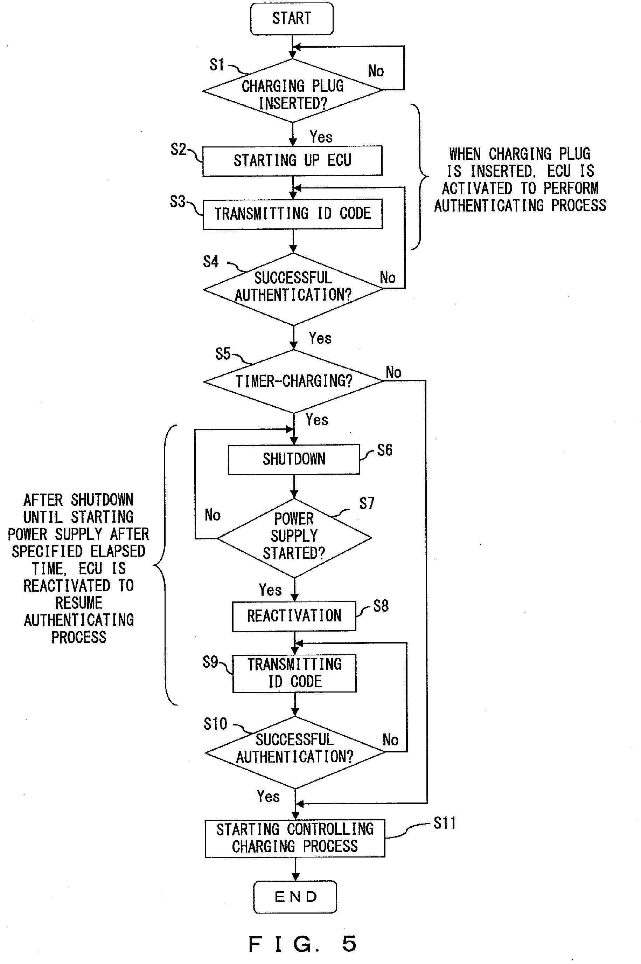

FIG. 5 is a flowchart for explanation of the operation of each circuit in the ECU 14.

First, the inlet detection circuit 31 detects that the charging plug 17 is inserted into the inlet 18 (YES in S1), it outputs a signal about the information to the CPU 36, and activates the ECU 14 through the CPU 36 (S2). For example, when the signal informing that the charging plug 17 has been inserted into the inlet 18 is output from the inlet detection circuit 31 to the CPU 36, the sleep state of the CPU 36 is released, and the CPU 36 controls the operation of the PLC communication circuit 32.

Next, the PLC communication circuit 32 transmits the ID code to the charging station 12 (S3).

Next, when the CPU 36 determines that the authentication result indicating "successful authentication" is received in the PLC communication circuit 32 (YES in S4), it determines whether or not the charging start timing signal received in the PLC communication circuit 32 indicates the "timer-charging" (S5). For example, when the authentication result is "successful authentication", the CPU 36 transmits a charging start timing request signal in the PLC communication circuit 32. When the charging start timing request signal is received in the PLC communication circuit 26, the CPU 27 of the charging station 12 transmits the charging start timing signal to the electric vehicle 13.

If it is determined that the charging start timing signal does not indicate the "timer-charging", that is, the charging start timing signal indicates the "immediate charging" (NO in S5), then the CPU 36 starts controlling the charging process (for example, monitoring the charging state of the charger 15 etc.) (S11).

On the other hand, if it is determined that the charging start timing signal indicates the "timer-charging" (YES in S5), then the CPU 36 stops the power supply from the internal power supply circuit 35 to each circuit (mainly the CPU 36 of high power consumption) in the ECU 14 (shut down) (S6). It is assumed that power continues to be supplied to the start-up signal generation circuit 34.

Next, when a start-up signal is received (YES in S7), the internal power supply circuit 35 resumes (reactivates) the power supply to each circuit in the ECU 14 (S8). That is, when the power supply starts from the charging station 12 to the electric vehicle 13 after specified elapsed time, the voltage detection circuit 33 detects an AC voltage and a start-up signal is output from the start-up signal generation circuit 34 to the internal power supply circuit 35. Then, the internal power supply circuit 35 resumes the power supply to each circuit in the ECU 14.

Next, the PLC communication circuit 32 transmits the ID code to the charging station 12 (S9).

Next, when the CPU 36 determines that an authentication result indicating the "successful authentication" is received in the PLC communication circuit 32 (YES in S10), it starts controlling the charging process (S11).

Thus, when the user sets charging start timing after the specified elapsed time, the power supply to each circuit in the ECU 14 is stopped until the power supply from the charging station 12 is started in the electric vehicle 13 according to the present embodiment. Therefore, the discharge of the auxiliary battery 37 can be suppressed.

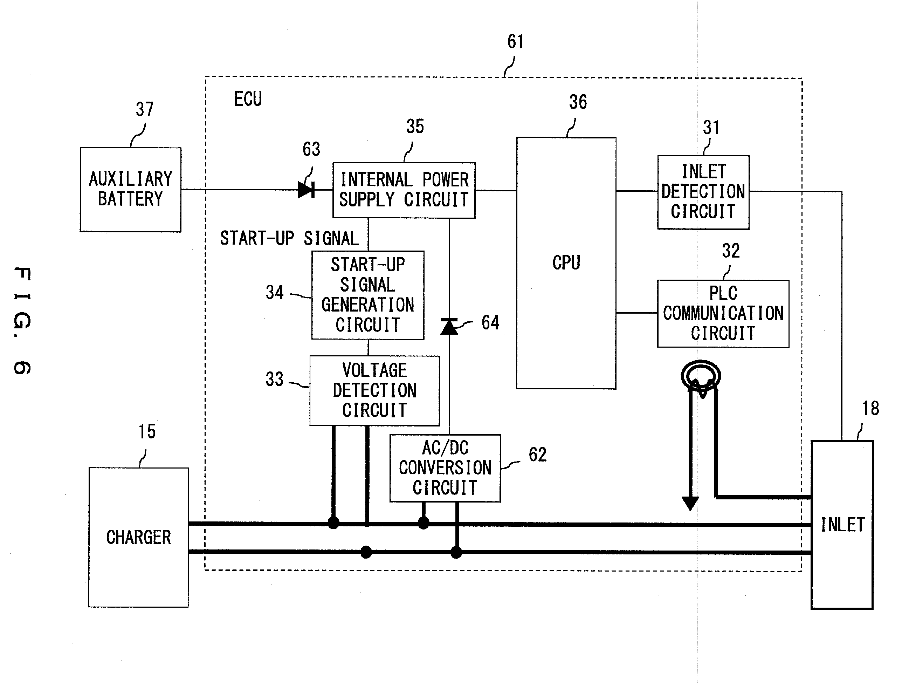

FIG. 6 is a configuration of the ECU in the electric vehicle 13 according to another embodiment of the present invention. The same configuration as FIG. 3 is assigned the same reference numeral.

An ECU 61 illustrated in FIG. 6 is configured by the inlet detection circuit 31, the PLC communication circuit 32, the voltage detection circuit 33, the start-up signal generation circuit 34, the internal power supply circuit 35, the CPU 36, an AC/DC conversion circuit 62 (conversion circuit), a diode 63 for protection against a reverse current provided between the auxiliary battery 37 and the internal power supply circuit 35, and a diode 64 for protection against a reverse current provided between the AC/DC conversion circuit 62 and the internal power supply circuit 35. The AC/DC conversion circuit 62 can also be provided external to the ECU 61.

The AC/DC conversion circuit 62 converts the power supplied from the charging station 12 to the electric vehicle 13 into a direct current and supplies it to the internal power supply circuit 35.

When a start-up signal is input, the internal power supply circuit 35 supplies the power converted into a direct current by the AC/DC conversion circuit 62 to each circuit in the ECU 61. That is, when electric power is supplied from the charging station 12 to the electric vehicle 13, the power converted into a direct current by the AC/DC conversion circuit 62, not the power obtained from the auxiliary battery 37, is supplied to each circuit in the ECU 61.

Thus, while the power is supplied from the charging station 12 to the electric vehicle 13, the power of the auxiliary battery 37 is not consumed, thereby suppressing the discharge of the auxiliary battery 37.

The operation of the CPU 36 in the ECU 61 illustrated in FIG. 6 is similar to the operation in the flowchart in FIG. 5.

In the embodiments above, a signal is communicated between the charging station 12 and the ECU 14 of the electric vehicle 13 in the power line communication, but the communication system between the charging station 12 and the ECU 14 of the electric vehicle 13 is not specifically limited to wireless communications.

In the embodiments above, the authenticating process for determining before supplying electric power whether or not the electric vehicle 13 has obtained a permit to be charged, but when the charging station 12 is a personally owned charging station, it is not necessary to perform the authenticating process. In this case, the steps S3, S4, S9, and S10 illustrated in FIG. 5 are omitted.

### Reference numerals

- 11: vehicle charging system
- 12: charging station
- 13: electric vehicle
- 14: ECU
- 15: charger
- 16: AC cable
- 17: charging plug
- 18: inlet
- 21: display device
- 22: network circuit
- 23: memory
- 24: internal power supply circuit
- 25: commercial power supply
- 26: PLC communication circuit
- 27: CPU
- 28: switch
- 31: inlet detection circuit
- 32: PLC communication circuit
- 33: voltage detection circuit
- 34: start-up signal generation circuit
- 35: internal power supply circuit
- 36: CPU
- 37: auxiliary battery
- 61: ECU
- 62: AC/DC conversion circuit
- 63, 64: diode

## Claims

1. An electric vehicle which charges a battery for driving a vehicle driving motor by electric power supplied from a charging station with charging start timing set by a user, comprising:
a control circuit controlling a charging process when the battery is charged;
an internal power supply circuit supplying electric power obtained from an auxiliary battery to the control circuit; and
a detection circuit detecting the power supplied from the charging station, wherein:
the control circuit stops the power supply from the internal power supply circuit to the control circuit when the charging start timing comes after a specified lapse of time; and
the internal power supply circuit resumes the power supply to the control circuit when the detection circuit detects the power.

2. The vehicle according to claim 1, further comprising
a conversion circuit converting the power supplied from the charging station into a direct current; and
the internal power supply circuit supplies to the control circuit the power converted into the direct current by the conversion circuit while the charging station is supplying power.
